(19) Europäisches Patentamt
European Patent Office
Office européen des brevets

(11) EP 3 851 464 A1

(12) **EUROPEAN PATENT APPLICATION**
published in accordance with Art. 153(4) EPC

(43) Date of publication:
**21.07.2021 Bulletin 2021/29**

(21) Application number: **19859095.2**

(22) Date of filing: **12.09.2019**

(51) Int Cl.:
***C08F 220/10*** *(2006.01)* ***C08F 230/02*** *(2006.01)*
***C09D 7/65*** *(2018.01)* ***C09D 201/00*** *(2006.01)*

(86) International application number:
**PCT/JP2019/035960**

(87) International publication number:
**WO 2020/054816 (19.03.2020 Gazette 2020/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **14.09.2018 JP 2018172144**

(71) Applicant: **Sekisui Kasei Co., Ltd.**
**Kita-ku**
**Osaka-shi**
**Osaka 530-8565 (JP)**

(72) Inventor: **HARADA, Ryosuke**
**Osaka-shi, Osaka 530-8565 (JP)**

(74) Representative: **Müller-Boré & Partner**
**Patentanwälte PartG mbB**
**Friedenheimer Brücke 21**
**80639 München (DE)**

# (54) HOLLOW POLYMER PARTICLES AND METHOD FOR MANUFACTURING SAME

(57) Hollow polymer particles comprising a polymer containing a vinylic monomer unit and a phosphate ester monomer unit, the hollow polymer particles having a volume average particle diameter of 0.5 to 1000 μm.

EP 3 851 464 A1

## Description

Technical Field

The present invention relates to hollow polymer particles and a method for producing the same.

Background Art

Polymer particles having voids inside thereof are being developed as functional members, such as light diffusing agents, matting agents, heat insulating agents, and lightening agents, by making use of the voids.

PTL 1 discloses an invention relating to hollow porous resin particles comprising a mesoporous structure and an outer shell formed on the surface of the mesoporous structure. The hollow porous resin particles are described as being obtained by allowing an oil-soluble polymerization initiator and a water-soluble polymerization initiator to simultaneously act when a polymerizable monomer is subjected to suspension polymerization in a water system.

However, since the surface layer of the hollow porous resin particles is extremely thin and brittle, there is a high risk that the particles are destroyed due to the application of an external force to expose the inside.

On the other hand, PTL 2 discloses porous resin particles comprising a methacrylic resin, wherein the particles are porous inside and are provided on their surface with a non-porous surface layer. The porous resin particles are described as being obtained by swelling slightly crosslinked (0.15%) particles with an alcohol solvent, then dropping them into an aqueous system for precipitation, and removing the alcohol.

However, even such porous resin particles do not have a sufficient crosslinked structure, and the strength of the particles is insufficient. For this reason, the particles may be deformed by an external force, and their internal pores may be crushed. In addition, the solvent resistance is insufficient, and it is difficult to use them with media other than aqueous media.

As described above, conventional hollow porous particles did not have sufficient mechanical strength and were easily deformed and broken due to the application of an external force, and it was difficult to maintain their shape under conditions where an external force was applied. Even if such hollow porous particles having insufficient mechanical strength are used as a light diffusing agent or a matting agent to produce optical films, paints, etc., coating films formed from the resulting optical films and paints are vulnerable to scratches.

Citation List

Patent Literature

PTL 1: JP2017-82152A
PTL 2: JP2015-67803A

Summary of Invention

Technical Problem

In view of the above circumstances, an object of the present invention is to provide hollow polymer particles having high mechanical strength.

Solution to Problem

As a result of extensive studies to achieve the above object, the present inventor found that hollow particles comprising a polymer containing specific monomer units and having a specific volume average particle diameter have high mechanical strength. The present inventor has completed the present invention upon further studies based on the above finding.

Specifically, the present invention provides the following hollow polymer particles.

Item 1.
Hollow polymer particles comprising a polymer containing a vinylic monomer unit and a phosphate ester monomer unit, the hollow polymer particles having a volume average particle diameter of 0.5 to 1000 μm.
Item 2.

The hollow polymer particles according to Item 1, wherein the phosphate ester monomer unit has an ethylenically unsaturated group.

Item 3.

The hollow polymer particles according to Item 1 or 2, wherein the phosphate ester monomer unit is represented by the following formula (1):

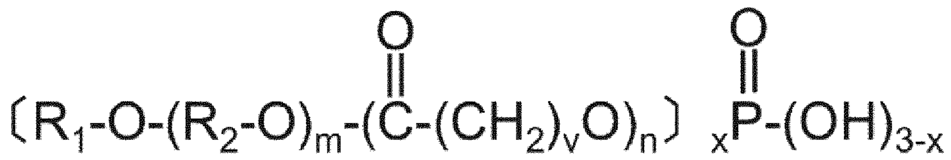

Formula (1)

wherein $R_1$ is a (meth) acrylic group or an allyl group, $R_2$ is a linear or branched alkylene group, m is an integer of 1 to 30, n is 0 or 1, v is an integer of 1 to 10, and x is 1 or 2.

Item 4.

Hollow polymer particles comprising a polymer containing a vinylic monomer unit,

the hollow polymer particles having a phosphorus element content of 2 to 200 mg/kg and an alkaline earth metal element content of 1 to 100 mg/kg, wherein the phosphorus element content is larger than the alkaline earth metal element content, and

the hollow polymer particles having a volume average particle diameter of 0.5 to 1000 μm.

Item 5.

The hollow polymer particles according to any one of Items 1 to 4, which have a specific surface area of 1 to 30 $m^2/g$ and a bulk specific gravity of 0.1 to 0.4 $g/cm^3$.

Item 6.

The hollow polymer particles according to any one of Items 1 to 4, wherein the particles each have a porous structure inside thereof.

Item 7.

The hollow polymer particles according to any one of Items 1 to 4, wherein the particles each have only one pore inside thereof.

Item 8.

A resin composition comprising the hollow polymer particles according to any one of Items 1 to 7.

Item 9.

A coating composition comprising the hollow polymer particles according to any one of Items 1 to 7.

Item 10.

A cosmetic comprising the hollow polymer particles according to any one of Items 1 to 7.

Item 11.

A light diffusion film comprising the hollow polymer particles according to any one of Items 1 to 7.

Item 12.

A method for producing hollow polymer particles, the method comprising subjecting a monomer mixture containing 0.01 to 1 part by mass of a phosphate ester monomer unit based on 100 parts by mass of a vinylic monomer unit to suspension polymerization in the presence of a non-polymerizable organic compound and a dispersant.

Item 13.

The method for producing hollow polymer particles according to Item 12, wherein the dispersant is a phosphate of an alkaline earth metal.

## Advantageous Effects of Invention

The hollow polymer particles of the present invention have high mechanical strength.

## Description of Embodiments

### First Invention: Hollow Polymer Particles

The hollow polymer particles of the present invention comprise a polymer containing a vinylic monomer unit and a phosphate ester monomer unit, and have a volume average particle diameter of 0.5 to 1000 μm.

The hollow polymer particles of the present invention may have a form with one hollow structure inside the particles, or may have a porous structure inside the particles. Further, the shape of the particles is preferably spherical in consideration of the mechanical strength of the particles.

The volume average particle diameter of the hollow polymer particles is 0.5 μm or more, and preferably 2 μm or more. If the volume average particle diameter of the hollow polymer particles is less than 0.5 μm, when the hollow polymer particles are mixed in a coating film or the like, it is necessary to mix them in a large amount in order to obtain the desired optical characteristics, which is uneconomical. In contrast, the volume average particle diameter of the hollow polymer particles is 1000 μm or less, preferably 100 μm or less, and more preferably 50 μm or less. If the volume average particle diameter of the hollow polymer particles exceeds 1000 μm, the hollow polymer particles are removed from the coating film.

In the present specification, the volume average particle diameter of the hollow polymer particles can be determined by the Coulter method. The volume average particle diameter of the hollow polymer particles is measured with a Coulter Multisizer™ 3 (analyzer produced by Beckman Coulter). More specifically, the measurement is carried out using an aperture calibrated according to the Multisizer™ 3 user's manual, published by Beckman Coulter. The aperture used for measurement is suitably selected depending on the size of the hollow polymer particles to be measured. The current (aperture current) and gain are suitably set depending on the size of the selected aperture. For example, when an aperture with a size of 50 μm is selected, the current (aperture current) is set to be -800, and the gain is set to be 4. The measurement sample used is a dispersion obtained by dispersing 0.1 g of hollow polymer particles in 10 ml of a 0.1 wt% nonionic surfactant aqueous solution using a touch mixer (Touch Mixer MT-31, produced by Yamato Scientific Co., Ltd.) and an ultrasonic cleaner (Ultrasonic Cleaner VS-150, produced by Velvo-Clear Co.). During measurement, gentle stirring is performed to an extent in which bubbles are not formed in the beaker. The measurement is ended when the measurement of 100000 hollow polymer particles is completed. The volume average particle diameter of the hollow polymer particles is the arithmetic mean in the particle size distribution on a volume basis of 100000 particles.

While the hollow polymer particles preferably have a hollow structure or porous structure inside thereof, the surface of the hollow polymer particles is preferably non-porous. More specifically, the specific surface area of the hollow polymer particles is preferably 1 $m^2$/g or more, and more preferably 1.5 $m^2$/g or more. High light diffusivity can be obtained by adopting such a configuration. On the other hand, the specific surface area of the hollow polymer particles is preferably 30 $m^2$/g or less, and more preferably 25 $m^2$/g or less, because there are less shrinkage and cracking on the particle surface. In the present specification, the specific surface area of the hollow polymer particles is defined as being measured according to the BET method (nitrogen adsorption method) described in ISO 9277, 1st edition, JIS Z 8830:2001.

Moreover, the bulk specific gravity of the hollow polymer particles is preferably 0.1 g/$cm^3$ or more, and more preferably 0.15 g/$cm^3$ or more, because of high strength. On the other hand, the bulk specific gravity of the hollow polymer particles is preferably 0.4 g/$cm^3$ or less, and more preferably 0.35 g/$cm^3$ or less, because the weight is light and light diffusivity can be obtained by adding a small amount of the hollow polymer particles. In the present specification, the bulk specific gravity of the hollow polymer particles is defined as being measured according to JIS K5101-12-1 (Test methods for pigments - Part 12: Apparent density or apparent specific volume - Section 1: Loose packing method).

The hollow polymer particles are configured to comprise a polymer containing a vinylic monomer unit and a phosphate ester monomer unit.

The vinylic monomer unit used is not particularly limited, and known vinylic monomer units can be widely used. Specifically, examples of a monofunctional vinylic monomer unit having one ethylenically unsaturated group include (meth)acrylic acid, (meth)alkyl acrylate monomer unit, 2-hydroxyethyl methacrylate, 2-methoxyethyl methacrylate, glycidyl methacrylate, tetrahydrofurfuryl methacrylate, diethylaminoethyl methacrylate, trifluoroethyl methacrylate, heptadecafluorodecyl methacrylate, styrenic monomer unit, vinyl acetate, and the like. The alkyl group contained in the (meth)alkyl acrylate monomer unit may be linear or branched. Examples of the (meth)alkyl acrylate monomer include alkyl acrylates, such as methyl acrylate, ethyl acrylate, n-butyl acrylate, isobutyl acrylate, and 2-ethylhexyl acrylate; alkyl methacrylates, such as n-butyl methacrylate, 2-ethylhexyl methacrylate, methyl methacrylate, ethyl methacrylate, isobutyl methacrylate, cyclohexyl methacrylate, benzyl methacrylate, and isobornyl methacrylate; and the like. The alkyl group contained in the (meth)alkyl acrylate monomer is preferably a $C_{1-8}$ alkyl group, and more preferably a $C_{1-4}$ alkyl group. When the alkyl group contained in the (meth)alkyl acrylate monomer has 1 to 8 carbon atoms, the stability of the dispersion is excellent during suspension polymerization. As a result, hollow polymer particles with high mechanical strength can be easily obtained.

Examples of the styrenic monomer include styrene, p-methylstyrene, α-methylstyrene, and the like. Further, examples of a polyfunctional vinylic monomer unit having two or more ethylenically unsaturated groups include a polyfunctional (meth)acrylate monomer unit, an aromatic divinylic monomer unit, and the like.

Examples of the polyfunctional (meth)acrylate monomer include ethylene glycol di(meth)acrylate, diethylene glycol di(meth)acrylate, triethylene glycol di(meth)acrylate, tetraethylene glycol di(meth)acrylate, nonaethylene glycol di(meth)acrylate, tetradecaethylene glycol di(meth)acrylate, decaethylene glycol di(meth)acrylate, pentadecaethylene glycol di(meth)acrylate, 1,3-butylene glycol di(meth)acrylate, 1,4-butanediol di(meth)acrylate, 1,6-hexanediol di(meth)acrylate, glycerol di(meth)acrylate, trimethylolpropane tri(meth)acrylate, pentaerythritol tetra(meth)acrylate, diethylene glycol di(meth)phthalate, caprolactone-modified dipentaerythritol hexa(meth)acrylate, caprolactone-modified hydroxypivalate neopentyl glycol diacrylate, polyester acrylate, urethane acrylate, and the like.

Examples of the aromatic divinylic monomer include divinyl benzene, divinyl naphthalene, and derivatives thereof.

It is preferable that the vinylic monomer unit contains a polyfunctional vinylic monomer unit, such as ethylene glycol dimethacrylate, trimethylolpropane trimethacrylate, or divinyl benzene, because the resulting hollow polymer particles have excellent solvent resistance in addition to high mechanical strength.

The polyfunctional vinylic monomer unit is preferably contained in an amount of 5 mass% or more, and more preferably 10 mass% or more, in 100 mass% of the entire vinylic monomer units. Since the polyfunctional vinylic monomer unit is contained in an amount of 5 mass% or more, a hollow structure can be easily formed. On the other hand, the amount of the polyfunctional vinylic monomer unit is preferably 50 mass% or less, and more preferably 40 mass% or less, in 100 mass% of the entire vinylic monomer units. Since the amount of the polyfunctional vinylic monomer unit is 50 mass% or less, the shrinkage of the surface of the obtained hollow polymer particles is small, and the strength is increased.

The phosphate ester monomer unit is preferably an acidic phosphate ester monomer unit, because it easily orients on the droplet surface and acts with the inorganic dispersant to increase the hardness near the particle surface during suspension polymerization.

The acidic phosphate ester monomer unit is preferably an acidic phosphate ester monomer having an ethylenically unsaturated group, because the particle hardness can be increased by copolymerization with the vinylic monomer near the droplet surface during suspension polymerization.

More specific examples of the acidic phosphate ester monomer having an ethylenically unsaturated group include one having a structural formula represented by the following formula (1) :

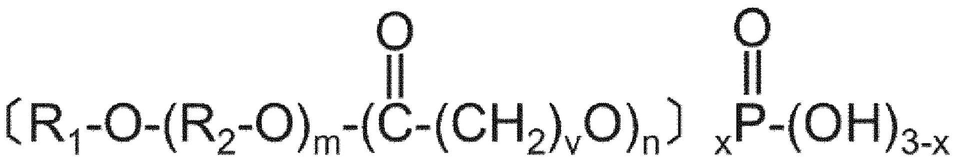

Formula (1)

wherein $R_1$ is a (meth) acrylic group or an allyl group, $R_2$ is a linear or branched alkylene group, m is an integer of 1 to 30, n is 0 or 1, v is an integer of 1 to 10, and x is 1 or 2.

Even more specific examples include caprolactone EO-modified dimethacrylate phosphate represented by the following formula (2) (product name: KAYAMER PM-21, produced by Nippon Kayaku Co., Ltd.), polyoxypropylene allyl ether phosphate ester represented by the following formula (3) (product name: Adekaria Soap PP-70, produced by ADEKA Corporation), and 2-methacryloyloxyethyl acid phosphate.

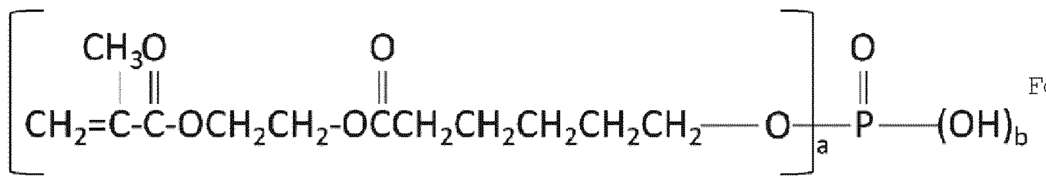

Formula (2)

wherein a and b satisfy a=1 and b=2, or a=2 and b=1.

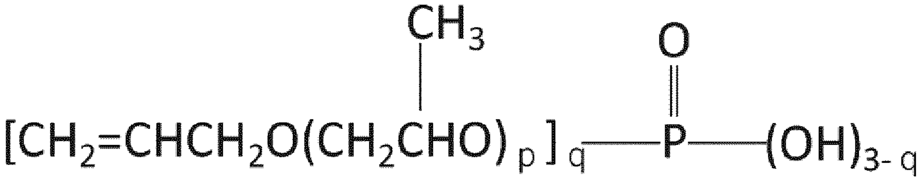

Formula (3)

wherein p is an integer of 1 to 30, and q is 1 or 2.

The amount of the phosphate ester monomer unit is preferably 0.01 parts by mass or more, and more preferably 0.05 parts by mass or more, based on 100 parts by mass of the vinylic monomer unit. When the monomer unit having a phosphate ester moiety as a main skeleton is contained in an amount of 0.01 parts by mass or more based on 100 parts by mass of the vinylic monomer unit, there is an advantage that a hollow structure can be formed. On the other hand, the amount of the phosphate ester monomer unit is preferably 1 part by mass or less, and more preferably 0.8 parts by mass or less, based on 100 parts by mass of the vinylic monomer unit. When the amount of the phosphate

ester monomer unit is 1 part by mass or less based on 100 parts by mass of the vinylic monomer unit, there is an advantage that the resulting hollow polymer particles can easily maintain a substantially spherical shape. It is preferable that the phosphate ester monomer unit is copolymerized with the vinylic monomer unit, because high-strength hollow polymer particles can be obtained.

In addition, the hollow polymer particles may suitably contain, if necessary, one or more of various components, such as pigments, antioxidants, flavoring agents, ultraviolet protective agents, surfactants, preservatives, and medicinal ingredients.

Second Invention: Hollow Polymer Particles

Further, the present invention includes an invention relating to hollow polymer particles comprising a polymer containing a vinylic monomer unit, the hollow polymer particles having a phosphorus element content of 2 to 200 mg/kg and an alkaline earth metal element content of 1 to 100 mg/kg, wherein the phosphorus element content is larger than the alkaline earth metal element content, and the hollow polymer particles having a volume average particle diameter of 0.5 to 1000 μm.

The size and shape of the hollow polymer particles of the second invention are the same as those described in the first invention. Further, the vinylic monomer unit is also the same as that described in the first invention.

In the hollow polymer particles of the second invention, the phosphorus element content is larger than the alkaline earth metal content. The contents of these elements can be measured by any elemental analysis. For example, the contents can be measured by high-frequency inductively coupled plasma emission spectroscopy (ICP emission spectroscopy).

The phosphorus element content of the hollow polymer particles is 2 mg/kg or more, and preferably 5 mg/kg or more. If the phosphorus element content is less than 2 mg/kg, a hollow structure is less likely to be formed in the hollow polymer particles. On the other hand, the phosphorus element content of the hollow polymer particles is 200 mg/kg or less, and preferably 100 mg/kg or less. If the phosphorus element content exceeds 200 mg/kg, the mechanical strength of the hollow polymer particles becomes insufficient.

The alkaline earth metal element content of the hollow polymer particles is 1 mg/kg or more, and preferably 3 mg/kg or more. In the second invention, the interaction between the phosphorus element and the alkaline earth metal element forms a dense coating on the surface layer of the hollow polymer particles, and significantly improves the mechanical strength of the hollow polymer particles. Therefore, if the alkaline earth metal element content of the hollow polymer particles is less than 1 mg/kg, such a coating is not sufficiently formed, and the mechanical strength of the hollow polymer particles becomes insufficient. On the other hand, the alkaline earth metal element content of the hollow polymer particles is 100 mg/kg or less, and preferably 80 mg/kg or less. If the alkaline earth metal element content exceeds 100 mg/kg, the dispersion stability of the hollow polymer particles in a coating film deteriorates when the coating film is formed, and the scratch resistance of a film deteriorates when the film is formed.

The type of alkaline earth metal element contained in the hollow polymer particles is not particularly limited. However, magnesium or calcium is preferable.

The hollow polymer particles may contain a phosphate ester monomer unit. For example, it is preferable that the hollow polymer particles comprise a polymer containing a vinylic monomer unit and a phosphate ester monomer unit described above. Examples of the phosphate ester monomer unit include those described in the first invention.

The specific surface area and bulk specific gravity of the hollow polymer particles are the same as those of the first invention.

As in the first invention, the hollow polymer particles may suitably contain, if necessary, one or more of various components, such as pigments, antioxidants, flavoring agents, ultraviolet protective agents, surfactants, preservatives, and medicinal ingredients.

The hollow polymer particles of the first and second inventions have excellent mechanical strength, and can be preferably used for resin compositions, coating compositions, cosmetics, light diffusion films, and the like. Resins formed from resin compositions obtained by using the hollow polymer particles of the present invention, coating films formed from coating compositions obtained by using the hollow polymer particles of the present invention, and light diffusion films obtained by using the hollow polymer particles of the present invention have a remarkable effect of being excellent in scratch resistance.

Third Invention: Method for Producing Hollow Polymer Particles

In addition, the present invention includes an invention relating to a method for producing hollow polymer particles. The method for producing hollow polymer particles of the present invention is characterized in that the method comprises subjecting a mixture of a non-polymerizable organic compound and a polymerizable monomer to suspension polymerization, and that the polymerizable monomer contains a polymerizable monomer unit having a phosphate ester

moiety in an amount of 0.01 to 1 part by mass based on 100 parts by mass of a vinylic monomer unit.

The vinylic monomer unit and the monomer unit having a phosphate ester moiety as a main skeleton can be the same as those described above.

The mixture of a vinylic monomer unit and a polymerizable monomer unit having a phosphate ester moiety is subjected to suspension polymerization in the presence of a non-polymerizable organic compound.

The non-polymerizable organic compound functions as a so-called solvent and also contributes to the formation of a hollow structure or porous structure inside the hollow polymer particles.

As such a non-polymerizable organic compound, it is preferable to use an organic solvent having a boiling point of 30°C or higher and 200°C or lower because it exists as a liquid in the temperature range in which the polymerization step is carried out. More specific usable examples include one or more members selected from the group consisting of saturated aliphatic hydrocarbons, such as n-pentane, isopentane, n-hexane, cyclohexane, and n-heptane; aromatic compounds, such as toluene and benzene; acetate compounds, such as ethyl acetate and butyl acetate; and fluorine compounds, such as hydrofluoroether and hydrofluorocarbon.

The amount of the non-polymerizable organic compound used is preferably 10 to 250 parts by mass based on 100 parts by mass of the mixture of a vinylic monomer unit and a polymerizable monomer unit having a phosphate ester moiety. When the amount of the non-polymerizable organic compound is 10 parts by mass or more, a hollow structure or a porous structure can be more reliably formed inside the hollow polymer particles. On the other hand, when the amount of the non-polymerizable organic compound is 250 parts by mass or less, sufficient strength of the obtained hollow polymer particles can be ensured.

It is also preferable to use a radical polymerization initiator to accelerate the polymerization reaction of the monomer units used. The radical polymerization initiator is not particularly limited, and known radical polymerization initiators can be widely used.

More specific examples of the radical polymerization initiator include oil-soluble azo compounds, such as 2,2'-azobis 2,4-dimethylvaleronitrile and 2,2'-azobisisobutyronitrile; and oil-soluble peroxides, such as benzoyl peroxide, lauroyl peroxide, octanoyl peroxide, methyl ethyl ketone peroxide, propyl peroxydicarbonate, cumene hydroperoxide, and t-butyl hydroperoxide.

These polymerization initiators can be used singly or in combination of two or more. The amount of the radical polymerization initiator added is preferably 0.01 to 10 parts by mass, and more preferably 0.01 to 5 parts by mass, based on 100 parts by mass of the polymerizable monomer, because the polymerization of the polymerizable monomer can be smoothly initiated.

In addition, it is also preferable to add, to the suspension, one or more members selected from the group consisting of dispersants, dispersion aids, surfactants, pH adjusters, water-soluble polymerization inhibitors, and antioxidants, if necessary.

The dispersant is not particularly limited, and known dispersants can be widely used. However, it is preferable to use an inorganic dispersant because high-strength hollow polymer particles can be obtained. More specific usable examples include water-insoluble salts, such as magnesium pyrophosphate, calcium carbonate, tricalcium phosphate, and barium carbonate; inorganic dispersants, such as silica and zirconium oxide; inorganic polymer substances, such as talc, bentonite, silicic acid, diatomaceous earth, and clay; and the like. These can be used singly or in combination of two or more.

Among the above, when using a pyrophosphate or phosphate of an alkaline earth metal as the dispersant, the metal ions interact with the phosphate ester moiety in the phosphate ester monomer to form a dense coating on the surface layer. As a result, high-strength hollow polymer particles can be obtained. Further, magnesium or calcium can be preferably adopted as the alkaline earth metal.

The amount of the dispersant added is preferably 0.1 to 5 mass%, and more preferably 0.5 to 3 mass%, in 100 mass% of the total amount of the polymerizable monomer because the stability of the oil droplets of the polymerizable monomer solution is ensured, and hollow polymer particles with a uniform particle diameter can be obtained.

Moreover, in order to obtain hollow polymer particles with a more uniform particle diameter, suspension polymerization may be performed by dispersing the droplets, for example, using a high-pressure disperser, such as a microfluidizer or a nanomizer, which utilizes the collision between the droplets or the collision force with the machine wall.

The polymerization temperature is preferably in the range of 30 to 105°C. The time for maintaining this polymerization temperature is preferably in the range of 0.1 to 20 hours. After completion of the polymerization, a suspension containing hollow polymer particles containing a non-polymerizable organic compound therein are obtained. This suspension is distilled to remove the non-polymerizable organic compound. Further, after the dispersion stabilizer in the suspension is dissolved with an acid or the like and removed, the hollow polymer particles are preferably separated by filtration to remove the aqueous medium, washed with water or a solvent, and then dried to isolate the hollow polymer particles. Alternatively, after completion of the polymerization, the non-polymerizable organic compound can be removed, without distilling the suspension, by removing the dispersion stabilizer, followed by washing and then drying, thereby isolating the hollow polymer particles. Since the thus-obtained hollow polymer particles of the present invention have

high mechanical strength, they can be suitably used as particles for light diffusing agents for optical films, optical sheets, and lighting covers, matting agents for paints, inks, etc., heat insulating agents for paints and sheets, and lightening agents for resins and molded products.

Although the embodiments of the present invention are described above, the present invention is not limited to these examples. Needless to say, the present invention can be implemented in various forms without departing from the gist of the present invention.

Examples

The embodiments of the present invention are described in more detail below based on Examples; however, the present invention is not limited thereto.

Method for Measuring Volume Average Particle Diameter of Hollow Polymer Particles

The hollow polymer particles were measured by the Coulter method as described below.

The volume average particle diameter of the hollow polymer particles is measured with a Coulter Multisizer™ 3 (analyzer produced by Beckman Coulter). The measurement is carried out using an aperture calibrated according to the Multisizer™ 3 user's manual, published by Beckman Coulter.

The aperture used for measurement is suitably selected depending on the size of the hollow polymer particles to be measured. The current (aperture current) and gain are suitably set depending on the size of the selected aperture. For example, when an aperture having a size of 50 μm is selected, the current (aperture current) is set to be -800, and the gain is set to be 4. The measurement sample used is a dispersion obtained by dispersion 0.1 g of hollow polymer particles in 10 ml of a 0.1 wt% nonionic surfactant aqueous solution using a touch mixer (Touch Mixer MT-31, produced by Yamato Scientific Co., Ltd.) and an ultrasonic cleaner (Ultrasonic Cleaner VS-150, produced by Velvo-Clear Co.). During measurement, gentle stirring is performed to an extent in which bubbles are not formed in the beaker. The measurement is ended when the measurement of 100000 hollow polymer particles is completed. The volume average particle diameter of the hollow polymer particles is the arithmetic mean in the particle size distribution on a volume basis of 100000 particles.

Specific Surface Area

The specific surface area of the hollow polymer particles was measured according to the BET method (nitrogen adsorption method) described in ISO 9277, 1st edition, JIS Z 8830:2001. For the target hollow polymer particles, the BET nitrogen adsorption isotherm was measured using an automated surface area and porosity analyzer (TriStar II, produced by Shimadzu Corporation). The specific surface area was calculated from the amount of nitrogen adsorbed using the BET multipoint method.

After pretreatment by heating gas purging, nitrogen was used as an adsorbate, and the measurement was carried out using the constant volume method under conditions in which the cross-sectional area of the adsorbate was 0.162 $nm^2$. Specifically, the pretreatment was carried out by performing a nitrogen purge for 20 minutes while heating a container containing resin particles at 65°C, allowing the container to cool at room temperature, and then performing vacuum degassing until the pressure inside the container was 0.05 mmHg or less while heating the container at 65°C.

Bulk Specific Gravity

The bulk specific gravity of the hollow polymer particles was measured according to JIS K5101-12-1 (Test methods for pigments - Part 12: Apparent density or apparent specific volume - Section 1: Loose packing method).

Example 1

105 parts by mass of methyl methacrylate, 45 parts by mass of trimethylolpropane trimethacrylate, 0.3 parts by mass KAYAMER™ PM-21 (produced by Nippon Kayaku Co., Ltd.) as a polymerizable monomer having an acidic phosphate ester group, 0.45 parts by mass of AVN (produced by Japan Finechem Company, Inc.) as a polymerization initiator, and 75 parts by mass of ethyl acetate and 75 parts by mass of cyclohexane as non-polymerizable organic compounds were mixed to prepare an oil phase. Further, 900 parts by mass of deionized water as an aqueous medium, and 23 parts by mass of magnesium pyrophosphate produced by the metathesis method as a dispersant were mixed to prepare an aqueous phase.

Next, the oil phase was dispersed in the aqueous phase using a TK homomixer (produced by PRIMIX Corporation) at 8000 rpm for 5 minutes to obtain a dispersion (about 8 μm). Then, the dispersion was placed in a polymerizer

equipped with a stirrer and a thermometer, the internal temperature of the polymerizer was raised to 55°C, and the suspension was continuously stirred for 5 hours. Thereafter, the internal temperature of the polymerizer was raised to 70°C (secondary temperature rise), and the suspension was stirred at 70°C for 2 hours. Thus, the suspension polymerization reaction was completed.

After cooling the suspension, the dispersant (magnesium pyrophosphate) contained in the suspension was decomposed with hydrochloric acid. Then, the suspension was dehydrated by filtration to separate solids, and the solids were washed with sufficient water. Thereafter, the non-polymerizable organic compounds were removed by vacuum-drying at 70°C for 24 hours, thereby obtaining spherical polymer particles. The average particle diameter of the obtained polymer particles was 8.0 μm. According to SEM observation, the obtained polymer particles had a porous shape inside. The bulk specific gravity was 0.33 g/ml. Further, the specific surface area of the obtained particles measured before and after treatment with a jet mill at a pressure of 0.4 MPa was 8.2 $m^2$/g and 23.2 $m^2$/g, respectively.

Example 2

Polymer particles were obtained in the same manner as in Example 1, except that 54 parts by mass of styrene, 36 parts by mass of ethylene glycol dimethacrylate, 105 parts by mass of cyclohexane, and 105 parts by mass of ethyl acetate were used.

Example 3

Polymer particles were obtained in the same manner as in Example 1, except that 135 parts by mass of methyl methacrylate and 15 parts by mass of trimethylolpropane trimethacrylate were used.

Example 4

Polymer particles were obtained in the same manner as in Example 1, except that 105 parts by mass of isobutyl methacrylate and 45 parts by mass of ethylene glycol dimethacrylate were used.

Example 5

Polymer particles were obtained in the same manner as in Example 1, except that 105 parts by mass of styrene, 45 parts by mass of trimethylolpropane trimethacrylate, and 0.8 parts by mass of Adekaria Soap PP-70 (produced by ADEKA Corporation) as a polymerizable monomer having an acidic phosphate ester group were used.

Example 6

Polymer particles were obtained in the same manner as in Example 1, except that 150 parts by mass of cyclohexane was used as a non-polymerizable organic compound. The obtained particles had only one pore inside.

Example 7

When the prepared oil phase was dispersed in the aqueous phase in Example 1, the rotation speed of the TK homomixer was changed to 2500 rpm, and a dispersion (about 35 μm) was obtained. The subsequent polymerization step and other steps were performed in the same manner as in Example 1, thereby obtaining polymer particles.

Example 8

65 parts by mass of methyl methacrylate, 85 parts by mass of ethylene glycol dimethacrylate, 0.3 parts by mass of KAYAMER™ PM-21 as a polymerizable monomer having an acidic phosphate ester group, 0.75 parts by mass of AVN as a polymerization initiator, and 75 parts by mass of ethyl acetate and 75 parts by mass of cyclohexane as non-polymerizable organic compounds were mixed to prepare an oil phase. Further, 900 parts by mass of deionized water as an aqueous medium, and 90 parts by mass of tricalcium phosphate as a dispersant were mixed to prepare an aqueous phase.

Polymer particles were obtained in the same manner as in Example 1, except for the above. The average particle diameter of the obtained polymer particles was 8.0 μm. According to SEM observation, the obtained polymer particles had a porous shape inside. The bulk specific gravity was 0.32 g/ml. Further, the specific surface area of the obtained particles measured before and after treatment with a jet mill at a pressure of 0.4 MPa was 7.2 $m^2$/g and 10.2 $m^2$/g, respectively.

Comparative Example 1

Polymer particles were obtained in the same manner as in Example 1, except that KAYMER PM-21 was not used as a polymerizable monomer having an acidic phosphate ester group. The obtained particles were porous particles.

Comparative Example 2

105 parts by mass of styrene, 45 parts by mass of trimethylolpropane trimethacrylate, 1.5 parts by mass of AVN (produced by Japan Finechem Company, Inc.) as an oil-soluble polymerization initiator, and 150 parts by mass of cyclohexane as a non-polymerizable organic compound were mixed to prepare an oil phase. Further, 900 parts by mass of deionized water as an aqueous medium, 1 part by mass of sodium lauryl sulfate as a surfactant, and 2.3 parts by mass of VA-057 (produced by Wako Pure Chemical Industries, Ltd.) as a water-soluble polymerization initiator were mixed to prepare an aqueous phase.

Next, the oil phase was dispersed in the aqueous phase using a TK homomixer (produced by PRIMIX Corporation) at 8000 rpm for 5 minutes to obtain a dispersion (about 8 μm). Then, the dispersion was placed in a polymerizer equipped with a stirrer and a thermometer, the internal temperature of the polymerizer was raised to 60°C, and the suspension was continuously stirred for 5 hours. Thereafter, the internal temperature of the polymerizer was raised to 70°C (secondary temperature rise), and the suspension was stirred at 70°C for 2 hours. Thus, the suspension polymerization reaction was completed.

After cooling the suspension, the suspension was dehydrated by filtration to separate solids, and the solids were washed with sufficient water. Then, the non-polymerizable organic compound was removed by vacuum-drying at 70°C for 24 hours, thereby obtaining polymer particles. The average particle diameter of the obtained polymer particles was 8.0 μm. According to SEM observation, the obtained polymer particles had a porous shape inside.

Mechanical Strength Evaluation Test

The obtained hollow polymer particles of the Examples and Comparative Examples were passed through a jet mill (Current Jet CJ-10, produced by Nisshin Engineering Inc.) at a pressure of 0.4 MPa with a feeding rate of 5 g/min.

Measurement of Phosphorus Element and Alkaline Earth Metal Element

The phosphorus element content and the alkaline earth metal element content were measured with a multitype ICP emission spectrometer (ICPE-9000, produced by Shimadzu Corporation). 1.0 g of hollow polymer particles was accurately weighed and heated at 450°C for 3 hours with an electric furnace (STR-15K muffle furnace, produced by Isuzu) to be ashed. The ashed hollow polymer particles were dissolved in 2 ml of concentrated hydrochloric acid, and distilled water was added to make a total volume of 50 ml, thereby obtaining a measurement sample. Then, the measurement sample was measured with the multitype ICP emission spectrometer under the following measurement conditions to obtain peak intensities at wavelengths of elements (Na, Ca, Mg, Fe, Cr, and P). Subsequently, the concentrations (μg/ml) of the elements (Na, Ca, Mg, Fe, Cr, and P) in the measurement sample were calculated from the obtained peak intensities at the wavelengths of the elements (Na, Ca, Mg, Fe, Cr, and P) based on a calibration curve for quantification prepared by the method for preparing a calibration curve described below. The concentration Tc (μg/ml) of each element (Na, Ca, Mg, Fe, Cr, and P) and the weight W (g) of the weighed hollow polymer particles were substituted into the following equation to calculate the element content in the hollow polymer particles.

$$\text{Element content} = (Tc\ (\mu g/ml)/W\ (g)) \times 50\ (ml)$$

Measurement Conditions

Measurement wavelength: Na (589.592 nm), Ca (317.933 nm), Mg (285.213 nm), Fe (238.204 nm), Cr (205.552 nm), P (177.499 nm) Viewing direction: axial direction
Radio frequency output: 1.20 kW
Carrier flow rate: 0.7 L/min
Plasma flow rate: 10.0 L/min
Auxiliary flow rate: 0.6 L/min
Exposure time: 30 seconds

Method for Preparing Calibration Curve

A standard solution for a calibration curve (XSTC-13 (general-purpose mixed standard solution, mixture of 31 elements (base: 5% $HNO_3$) each in an amount of about 10 mg/l) produced by SPEX, USA) was serially diluted with distilled water to prepare standard solutions at concentrations of 0 ppm (blank), 0.2 ppm, 1 ppm, 2.5 ppm, and 5 ppm. The standard solution at each concentration was measured with the multitype ICP emission spectrometer under the measurement conditions described above to obtain peak intensities at wavelengths of elements (Na, Ca, Mg, Fe, and Cr). The concentrations and peak intensities of the elements (Na, Ca, Mg, Fe, and Cr) were plotted to determine an approximate line (straight line or quadratic curve) by the least-squares method, and the approximate line was used as a calibration curve for quantification.

As shown in the following Table 1, the hollow polymer particles of the Comparative Examples were collapsed due to the jet mill treatment to expose the internal porous structure, and the specific surface area significantly increased compared to before the jet mill treatment. In contrast, it was confirmed that the increase in the specific surface area of the hollow polymer particles of the Examples after the jet mill treatment tended to be suppressed.

Table 1

| | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|
| Polymerizable monomer | MMA | 105 | | 135 | | | 105 | 105 | 65 | 105 | |
| | Styrene | | 54 | | | 105 | | | | | 105 |
| | IBMA | | | | 105 | | | | 85 | | |
| | EGDMA | | 36 | | | | | | | 45 | |
| | TMPTA | 45 | | 15 | 45 | 45 | 45 | 45 | | | |
| | DVB | | | | | | | | | | 45 |
| | PM-21 | 0.3 | 0.3 | 0.3 | 0.3 | | 0.3 | 0.3 | 0.3 | - | - |
| | PP-70 | | | | | 0.8 | | | | | |
| Polymerization initiator | AVN | 0.75 | 0.75 | 0.75 | 0.75 | 0.75 | 0.75 | 0.75 | 0.75 | 0.75 | 1.5 |
| | VA-057 | | | | | | | | | | 2.3 |
| Non-polymerizable organic compound | Ethyl acetate | 75 | 105 | 75 | 75 | 75 | | 75 | 75 | 75 | |
| | Cyclohexane | 75 | 105 | 75 | 75 | 75 | 150 | 75 | 75 | 75 | 150 |
| | | | | | | | | | | | |
| Dispersant | | Magnesium pyrophosphate | Magnesium pyrophosphate | Magnesium pyrophosphate | Magnesium pyrophosphate | Magnesium pyrophosphate | Magnesium pyrophosphate | Magnesium pyrophosphate | Tricalcium phosphate | Magnesium pyrophosphate | Sodium lauryl sulfate |
| Particle diameter | µm | 7.8 | 7.5 | 8.2 | 7.6 | 6.5 | 8.4 | 35 | 8.0 | 8.1 | 8.1 |
| Particle structure | | Porous inside | Porous inside | Porous inside | Porous inside | Porous inside | Single hollow | Porous inside | Porous inside | Porous | Porous inside |
| Phosphorus element content | mg/kg | 50 | 48 | 55 | 46 | 30 | 45 | 25 | 35 | Not detected | Not detected |

(continued)

| | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|
| Alkaline earth metal element content | mg/kg | 23 | 24 | 21 | 22 | 7 | 24 | 5 | 15 | 20 | Not detected |
| Specific surface area | $m^2/g$ | 8.2 | 3.6 | 3.5 | 5.4 | 1.9 | 1.1 | 10.3 | 7.2 | 85 | 1.9 |
| Bulk specific gravity | $g/cm^3$ | 0.33 | 0.3 | 0.38 | 0.33 | 0.29 | 0.3 | 0.35 | 0.32 | 0.37 | 0.332 |
| Specific surface area after jet milling | $m^2/g$ | 23.2 | 8.5 | 24 | 10.3 | 5.4 | 1.7 | 20.5 | 10.2 | 91 | 90 |

MMA: methyl methacrylate
EGDMA: ethylene glycol dimethacrylate
IBMA: isobutyl methacrylate
TMPTA: trimethylolpropane trimethacrylate
DVB: divinylbenzene
AVN: 2,2'-azobis 2,4-dimethylvaleronitrile
VA-057: 2,2'-azobis{2-[N-(2-carboxyethyl)amidinopropane tetrahydrate

Example 9

7.5 parts by mass of the hollow polymer particles obtained in Example 2, 30 parts by mass of acrylic resin (product name: Acrydic A811, produced by DIC Corporation), 10 parts by mass of a crosslinking agent (product name: VM-D, produced by DIC Corporation), and 50 parts by mass of butyl acetate as a solvent were mixed for 3 minutes using a stirring and defoaming device, and defoamed for 1 minute, thereby obtaining a light diffusion resin composition.
The resulting light diffusion resin composition was applied to a PET film with a thickness of 125 μm using a coating device with a blade with a clearance of 50 μm, followed by drying at 70°C for 10 minutes, thereby obtaining a light diffusion film A.

Comparative Example 3

A light diffusion film B was obtained in the same manner as in Example 9, except that the hollow polymer particles obtained in Comparative Example 2 were used.

Scratch Evaluation Test

The coated surface of the obtained light diffusion films was reciprocally polished with a cloth 20 times using a friction fastness tester, and the degree of scratches in the light diffusion films after polishing was visually observed. One without line scratches or peeling of the coating film was evaluated as ○, and one with line scratches and peeling of the coating film was evaluated as ×.

Haze and Total Light Transmittance Measurement Test

The total light transmittance of the light diffusion films was measured according to JIS K7361-1, and the haze was measured according to JIS K7136. Specifically, the total light transmittance and haze of the light diffusion films were measured using a haze meter (NDH2000) commercially available from Nippon Denshoku Industries Co., Ltd.
As shown in the following Table 2, the film of Comparative Example 3 did not give favorable results in the evaluation of scratch resistance. On the other hand, the film of Example 9 gave a good evaluation result of scratch resistance.

Table 2

| | Haze | Total light transmittance | Scratch resistance |
|---|---|---|---|
| Light diffusion film A | 87% | 62% | ○ |
| Light diffusion film B | 85% | 63% | × |

## Claims

1. Hollow polymer particles comprising a polymer containing a vinylic monomer unit and a phosphate ester monomer unit, the hollow polymer particles having a volume average particle diameter of 0.5 to 1000 μm.

2. The hollow polymer particles according to claim 1, wherein the phosphate ester monomer unit has an ethylenically unsaturated group.

3. The hollow polymer particles according to claim 1 or 2, wherein the phosphate ester monomer unit is represented by the following formula (1):

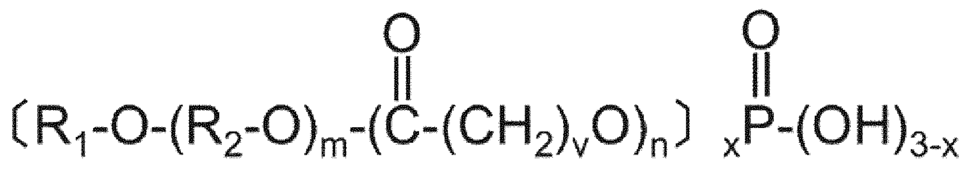

Formula (1)

wherein $R_1$ is a (meth) acrylic group or an allyl group, $R_2$ is a linear or branched alkylene group, m is an integer of

1 to 30, n is 0 or 1, v is an integer of 1 to 10, and x is 1 or 2.

**4.** Hollow polymer particles comprising a polymer containing a vinylic monomer unit,
the hollow polymer particles having a phosphorus element content of 2 to 200 mg/kg and an alkaline earth metal element content of 1 to 100 mg/kg, wherein the phosphorus element content is larger than the alkaline earth metal element content, and
the hollow polymer particles having a volume average particle diameter of 0.5 to 1000 μm.

**5.** The hollow polymer particles according to any one of claims 1 to 4, which have a specific surface area of 1 to 30 $m^2/g$ and a bulk specific gravity of 0.1 to 0.4 $g/cm^3$.

**6.** The hollow polymer particles according to any one of claims 1 to 4, wherein the particles each have a porous structure inside thereof.

**7.** The hollow polymer particles according to any one of claims 1 to 4, wherein the particles each have only one pore inside thereof.

**8.** A resin composition comprising the hollow polymer particles according to any one of claims 1 to 7.

**9.** A coating composition comprising the hollow polymer particles according to any one of claims 1 to 7.

**10.** A cosmetic comprising the hollow polymer particles according to any one of claims 1 to 7.

**11.** A light diffusion film comprising the hollow polymer particles according to any one of claims 1 to 7.

**12.** A method for producing hollow polymer particles, the method comprising subjecting a monomer mixture containing 0.01 to 1 part by mass of a phosphate ester monomer unit based on 100 parts by mass of a vinylic monomer unit to suspension polymerization in the presence of a non-polymerizable organic compound and a dispersant.

**13.** The method for producing hollow polymer particles according to claim 12, wherein the dispersant is a phosphate of an alkaline earth metal.

**INTERNATIONAL SEARCH REPORT**

International application No. PCT/JP2019/035960

A. CLASSIFICATION OF SUBJECT MATTER
Int.Cl. C08F220/10(2006.01)i, C08F230/02(2006.01)i, C09D7/65(2018.01)i, C09D201/00(2006.01)i

According to International Patent Classification (IPC) or to both national classification and IPC

B. FIELDS SEARCHED

Minimum documentation searched (classification system followed by classification symbols)
Int.Cl. C08F220/10, C08F230/02, C09D7/65, C09D201/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 2017-66306 A (SEKISUI PLASTICS CO., LTD.) 06 April 2017, paragraph [0002], examples 1-8, etc. (Family: none) | 1-8, 10, 12-13<br>9, 11 |
| X<br>A | JP 2015-101602 A (SEKISUI PLASTICS CO., LTD.) 04 June 2015, examples 1-7, 9, etc. (Family: none) | 1-8, 12-13<br>9-11 |
| X<br>A | WO 2015/163083 A1 (SEKISUI PLASTICS CO., LTD.) 29 October 2015, paragraph [0002], examples 1-4, 7-11, 13-17, etc. & US 2017/0058116 A1 paragraph [0002], examples 1-4, 7-11, 13-17, etc. & EP 3135696 A1 | 1-3, 5-12<br>4, 13 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 October 2019 (25.10.2019) | 05 November 2019 (05.11.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2019/035960

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2017-198966 A (RICOH CO., LTD.) 02 November 2017, production examples 2, 4, etc. (Family: none) | 1-3, 5-8, 12<br>4, 9-11, 13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017082152 A
- JP 2015067803 A